# EUROPÄISCHE PATENTSCHRIFT

(11) **EP 2 167 274 B1**
(45) Veröffentlichungstag und Bekanntmachung des Hinweises auf die Patenterteilung: **25.07.2012**
(21) Anmeldenummer: 08759543.5
(22) Anmeldetag: 13.05.2008
(51) Int. Cl.: B23Q 11/00, F16P 3/14

(54) **HANDWERKZEUGMASCHINE MIT EINER SICHERHEITSEINHEIT UND EINER KALIBRIEREINHEIT ZUR KALIBRIERUNG DER SICHERHEITSEINHEIT UND VERFAHREN ZUM BETREIBEN DER HANDWERKZEUGMASCHINE**
HANDTOOL COMPRISING A SAFETY UNIT AND A CALIBRATION UNIT FOR CALIBRATING THE SAFETY UNIT AND METHOD THEREFOR
MACHINE-OUTIL A MAIN POURVUE D'UNE UNITÉ DE SÉCURITÉ ET D'UNE UNITÉ DE CALIBRAGE POUR CALIBRER L'UNITÉ DE SÉCURITÉ ET PROCEDE D'UTILISATION DE LA MACHINE-OUTIL A MAIN

(30) Priorität: 11.07.2007 DE 102007032221
(43) Veröffentlichungstag der Anmeldung: 31.03.2010
(73) Patentinhaber: Robert Bosch GmbH, 70442 Stuttgart (DE)
(72) Erfinder: KRAPF, Reiner, 72770 Reutlingen (DE); BRAUN, Heiko, 70178 Stuttgart (DE); BAIERL, Wolfgang, 73630 Remshalden (DE); MAHLER, Michael, 70771 Leinfelden-Echterdingen (DE); HEES, Alexander Werner, 74321 Bietigheim-Bissingen (DE)
(86) Internationale Anmeldenummer: PCT/EP2008/055837
(87) Internationale Veröffentlichungsnummer: WO 2009/007159

(56) Entgegenhaltungen:
- WO-A-02/073086
- DE-A1- 10 310 768
- DE-A1- 19 544 632
- US-A1- 2002 061 134
- US-A1- 2008 079 590
- US-B1- 6 717 514

## Beschreibung

### Stand der Technik

Die Erfindung geht aus von einer Werkzeugmaschine mit einer Sicherheitseinheit nach dem Oberbegriff des Anspruchs 1.

Die Erfindung geht ferner aus von einem Verfahren mit einer Werkzeugmaschine nach dem Oberbegriff des Anspruchs 5

Es ist eine Tischkreissäge mit einer Sicherheitsvorrichtung bekannt. Diese ist mit einer Sensoreinheit versehen und dient mittels der Sensoreinheit zur Überwachung eines Gefahrenbereichs in der unmittelbaren Umgebung eines Sägeblatts.

Aus der WO 02 073086 A1 ist ein System zur Objekterkennung bzw. zur Erkennung des Eindringens und/oder Vorhandenseins von Objekte in einem vordefinierten Gebiet oder Bereich bekannt. Die WO 02 073086 A1 stellt dabei ein Verfahren zum Überwachen eines interessierenden Gebietes, das eine Grenze und einen Innenbereich aufweist, bereit, wobei das Verfahren die folgenden Schritte beinhaltet:
Überwachen mindestens eines Abschnitts des Grenzbereiches des interessierenden Gebietes in Bezug auf eine Verletzung durch ein Objekt;
Überwachen mindestens eines Abschnitts des innenbereiches des interessierenden Gebietes in Bezug auf das Objekt, nachdem das Objekt die Grenze verletzt.

Nachdem die Grenze durch ein Objekt verletzt worden ist, kann gemäß dem Verfahren begonnen werden, das gesamte Gebiet oder ausgewählte Bereiche innerhalb der Grenze des interessierenden Gebietes zu analysieren. Dies kann einen gewissen Grad von Präsenzüberwachung des interessierenden Gebietes gewährleisten. Bei einigen Ausführungsformen des Verfahrens der WO 02 073086 A1 kann die PräsenzÜberwachung mit einer langsameren Geschwindigkeit als die Grenzanalyse durchgeführt werden, insbesondere wenn eine oder mehrere Vorsichtsmaßnahmen bereits durch eine Grenzverletzung ausgelöst worden sind. Es ist gemäß WO 02 073086 A1 denkbar, dass die beiden Arten der Analyse gleichzeitig oder nacheinander stattfinden, in Abhängigkeit von der Anwendung. Nachdem das Objekt das interessierende Gebiet verlässt, erfolgt gemäß dem Verfahren der WO 02 073086 A1 vorzugsweise eine Rückkehr zum ursprünglichen stationären Zustand, und es werden nur die Grenzbereiche der ankommenden Bilder, überwacht.

Aus der US 6 717 514 B1 ist ein stationäres Alarmsystem und das zugrunde liegende Verfahren zur Vermeidung von Verletzungen bekannt, bei dem de Bewegungen eines menschlichen Operators von dem System überwacht werden. Dabei führt die überwachte Person einen transmitter mit sich, mit dessen Hilfe die Bewegungen durch das Alarmsystem erfasst werden können.

Aus der DE 103 10 768 A1 ist eine Vorrichtung zur Überwachung in drei Dimensionen bekannt, die in der Lage ist, mit hoher Genauigkeit das Ankommen eines Objekts in einem bestimmten dreidimensionalen Raum durch Verwenden von Musterlicht als Nachweisträger nachzuweisen. Dazu ist in dem System der DE 103 10 768 A1 vorgesehen, eine Dreidimensionalüberwachungsvorrichtung, welche ihrerseits aufweist: eine Einstrahlungsvorrichtung zur Einstrahlung eines bestimmten Musterlichts in einen zu überwachenden dreidimensionalen Raum S, eine Abbildungsvorrichtung zur Abbildung eines Projektionsmusters, das durch Einstrahlen des Musterlichts auf ein ankommendes Objekt und einen Schirm in dem Raum S projiziert ist, um Bilddaten aufzunehmen, und eine Messvorrichtung zur Messung einer Lage des Objekts beruhend auf dem Vergleich zwischen dem Überwachungsbild, das mit der Abbildungsvorrichtung aufgenommen ist, wenn das Objekt, in dem Raum S vorhanden ist, und einem Referenzbild, das mit der Abbildungsvorrichtung aufgenommen ist, wenn kein Objekt in dem Raum S vorhanden ist.

Aus der US 2008/0079590 A1 ist ein Verfahren und eine Vorrichtung zur Betriebssteuerung einer Maschine bekannt, bei dem der Anwender bzw. Maschinenbediener einen Sensor bei sich trägt, mit dem seine Position und damit eine eventuelle Gefährdungssituation erkannt werden kann.

Die US 4,722,021 offenbart ein Verfahren und eine Vorrichtung zur automatischen Notabschaltung einer Werkzeugmaschine, wie beispielsweise einer Bohrmaschine. Beim Schlagbohren in Wänden, in denen elektrische oder sanitäre Installationsleitungen verlegt sind, besteht die Gefahr, dass man mit dem Bohrer auf eine dieser Leitungen trifft. Die Folge davon ist, dass Leitungen unterbrochen oder durchbohrt werden oder aber das Werkzeug unbrauchbar wird. Bei dem Verfahren der US 4,722,021 wird dem Werkzeughalter des Werkzeuges eine Spannung zugeführt und der Strom über den Werkzeughalter gemessen. Bei Überschreitung eines vorgegebenen Stromes, wie dies im Falle eines angebohrten Metallteils gegeben ist, wird das Werkzeug automatisch abgeschaltet. Die Werkzeugmaschine der US 4,722,021 weist zudem Kalibrierungsmittel auf, die die Empfindlichkeit der Auslöseschwelle dieser Notabschaltung ändern können.

### Vorteile der Erfindung

Die Erfindung geht aus von einer Handwerkzeugmaschine mit einer Sicherheitseinheit und

eine Kalibriereinheit zur Kalibrierung der Sicherheitseinheit.

Dadurch kann eine vorteilhafte Anpassung der Sicherheitseinheit an eine Arbeitsumgebung bei der Nutzung der Handwerkzeugmaschine erreicht werden. Die Sicherheitseinheit weist insbesondere eine Sensoreinheit und eine Aktorikeinheit auf, welche zum Auslösen eines Sicherheitsvorgangs in Abhängigkeit einer durch die Sensoreinheit erfassten Kenngröße vorgesehen ist. Durch die Kalibriereinheit können besonders vorteilhaft Fehlauslösungen der Aktorikeinheit aufgrund einer bezüglich einer Werkeinstellung oder einer früheren Anwendung der Handwerkzeugmaschine geänderten Arbeitsumgebung vermieden werden. Diese geänderte Arbeitsumgebung kann sich durch ein geändertes Umgebungsparameter, wie Temperatur, Feuchtigkeit, Hausnetzimpedanz und/oder durch eine geänderte Bekleidung eines Heim- oder Handwerkers kennzeichnen. Unter einer "Kalibrierung" der Sicherheitseinheit soll insbesondere ein Vorgang verstanden werden, bei welchem ein Referenzwert für zumindest eine von der Sicherheitseinheit, insbesondere von der Sensoreinheit erfassbare Kenngröße festgelegt wird. Insbesondere kann dieser Referenzwert als Schwellwert der Kenngröße ausgebildet sein, oberhalb bzw. unterhalb welcher ein Vorgang mit der Aktorikeinheit ausgelöst wird. Zweckmäßigerweise stellt die Kalibrierung einen Vorgang dar, der vor einem Werkzeugantrieb der Werkzeugmaschine und vorzugsweise bei einer von einer Sensoreinheit der Sicherheitseinheit entkoppelten Aktorikeinheit stattfindet.

In der Ausführung der Erfindung weist die Werkzeugmaschine eine Bedieneinheit auf , die im Zusammenwirken mit der Kalibriereinheit für einen Kalibriervorgang durch einen Endbediener vorgesehen ist. Unter einer "Bedieneinheit" soll in diesem Zusammenhang insbesondere eine Einheit verstanden werden, die zur Herstellung eines Informationsverkehrs zwischen der Handwerkzeugmaschine und einem Endbediener der Handwerkzeugmaschine vorgesehen ist. Hierzu weist die Bedieneinheit vorzugsweise zumindest eine Ausgabeeinheit zur Ausgabe einer Information auf. Unter einer Bedieneinheit, die "für" einen Kalibriervorgang vorgesehen ist, soll insbesondere eine Bedieneinheit verstanden werden, die in zumindest einem Kalibriermodus der Kalibriereinheit herangezogen wird. Hierbei weist die Kalibriereinheit insbesondere einen Kalibriermodus auf, in welchem ein Kalibriervorgang einen Vorgang mit der Bedieneinheit, wie eine Ausgabe und/oder eine Eingabe, heranzieht. Unter einem "Endbediener" soll in diesem Zusammenhang insbesondere ein Heimwerker und/oder ein Handwerker verstanden werden, welcher die Handwerkzeugmaschine zu privaten bzw. gewerblichen Zwecken erwirbt. Vorteilhafterweise dient die Kalibriereinheit im Zusammenwirken mit der Bedieneinheit dazu, Kalibrierdaten einer in einem Werk beim Zusammenbau der Handwerkzeugmaschine durchgeführten Werkkalibrierung und/oder Kalibrierdaten einer vorherigen Anwendung der Werkzeugmaschine zu ändern.

Die Kalibriereinheit weist eine Überprüfungseinheit auf, die zum Überprüfen eines Kalibrierungszustands der Sicherheitseinheit vorgesehen ist. Dadurch kann vorteilhaft der Bedienkomfort erhöht werden. Insbesondere kann das Vorliegen einer an eine Arbeitsumgebung angepassten Kalibrierung erkannt werden, wodurch ein unnötiger Kalibriervorgang vermieden werden kann. Unter einem "Kalibrierzustand" soll in diesem Zusammenhang insbesondere das Vorliegen von Kalibrierdaten, wie insbesondere in einer gespeicherten Form, verstanden werden. Diese Kalibrierdaten können insbesondere zumindest einem Referenzwert für zumindest eine von der Sicherheitseinheit erfassbare Kenngröße entsprechen. Ferner können die Kalibrierdaten einer Kenngröße entsprechen, die zum Charakterisieren einer bestimmten Arbeitsumgebung dient, wie z.B. eine Temperaturkenngröße, eine Feuchtigkeitskenngröße, eine ein elektrisches, magnetisches und/oder elektromagnetisches Feld charakterisierende Kenngröße usw. Unter einem "Überprüfen" eines Kalibrierzustands soll insbesondere ein Überprüfen von Kalibrierdaten verstanden werden. Insbesondere kann darunter ein Vorgang verstanden werden, bei welchem vorhandene Kalibrierdaten mit zumindest einer durch die Sicherheitseinheit in einer aktuellen Arbeitsumgebung erfassten Kenngröße verglichen werden.

In diesem Zusammenhang kann ein hoher Bedienkomfort erreicht werden, wenn die Überprüfungseinheit zumindest einen automatischen Überprüfungsmodus aufweist. Hierbei kann die Überprüfungseinheit dazu vorgesehen sein, eine Überprüfung des Kalibrierzustands bei einer Inbetriebnahme der Handwerkzeugmaschine, wie z.B. beim Legen an Spannung der Handwerkzeugmaschine, automatisch durchzuführen.

Außerdem weist die Sicherheitseinheit eine Sensoreinheit zum Erfassen einer Kenngröße bei einem Werkzeugantrieb auf und die Überprüfungseinheit ist dazu vorgesehen, in einem Überprüfungsmodus einen Sensiervorgang der Sensoreinheit vor einem Werkzeugantrieb auszulösen. Es können dadurch vorteilhaft Bauteile eingespart werden, indem eine Sensoreinheit, welche bei einem Werkzeugantrieb zur Überwachung eines Gefahrenbereichs vorgesehen ist, zusätzlich zur Ermittlung einer Änderung einer Arbeitsumgebung im Vorfeld des Werkzeugantriebs dient. Unter einem "Werkzeugantrieb" soll in diesem Zusammenhang insbesondere ein Betriebsmodus der Handwerkzeugmaschine verstanden werden, bei welchem ein zur Bearbeitung eines Werkstücks vorgesehenes Werkzeug der Werkzeugmaschine mittels einer Antriebseinheit, wie z.B. mittels eines Elektromotors, zu einer Bewegung, wie z.B. zu einer Rotation, einer Pendelbewegung, einer Hin- und Herbewegung usw., angetrieben wird.

Eine besonders sichere Anwendung der Handwerkzeugmaschine ist erreicht, weil die Werkzeugmaschine ferner eine Steuereinheit zur Steuerung eines Werkzeugantriebs aufweist, welche in zumindest einem Betriebsmodus zum Starten des Werkzeugantriebs eine Überprüfung des Kalibrierzustands voraussetzt.

Eine schnelle und zuverlässige Überprüfung eines Kalibrierzustands der Sicherheitseinheit kann erreicht werden, wenn die Handwerkzeugmaschine eine Speichereinheit und eine Steuereinheit aufweist, die im Zusammenwirken mit der Speichereinheit zum Speichern von Kalibrierungsdaten vorgesehen ist.

In einer weiteren Ausführungsvariante der Erfindung wird vorgeschlagen, dass die Handwerkzeugmaschine eine Ausgabeeinheit und eine Steuereinheit aufweist, die im Zusammenwirken mit der Ausgabeeinheit zur Ausgabe einer Information in Abhängigkeit eines Kalibrierzustands der Sicherheitseinheit vorgesehen ist, wodurch der Bedienkomfort weiter erhöht werden kann. Die Ausgabeeinheit kann zu einer optischen, akustischen und/oder haptischen Ausgabe vorgesehen sein.

Die Erfindung geht ferner aus von einem Verfahren mit einer Werkzeugmaschine, gemäß Anspruch 5.

Die Überprüfung eines Kalibrierzustands der Sicherheitseinheit nach einer Inbetriebnahme der Handwerkzeugmaschine findet durch einen Endbediener statt, wodurch der Anwendungskomfort und die Anwendungssicherheit der Handwerkzeugmaschine vorteilhaft erhöht werden können.

Eine besonders hohe Sicherheit wird erreicht, wenn ein Starten eines Werkzeugantriebs durch eine Antriebseinheit der Handwerkzeugmaschine die Überprüfung voraussetzt.

Ferner wird vorgeschlagen, dass eine Kalibrierung der Sicherheitseinheit mittels eines Referenzobjekts durchgeführt wird, das als Werkzeugmaschinenzubehör ausgebildet ist, wodurch eine besonders einfache Kalibrierung erreicht werden kann. Unter einem "Werkzeugmaschinenzubehör" soll insbesondere ein Gegenstand verstanden werden, der von der Werkzeugmaschine getrennt oder lösbar ausgebildet ist und zur Durchführung der Kalibrierung von einem Endbediener handhabbar ist.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen, wie in den Ansprüchen 1-7 definiert.

Es zeigen:
- Fig. 1: eine Heckenschere mit einer Sensoreinheit in einer Seitenansicht,
- Fig. 2: eine Sicherheitsvorrichtung der Heckenschere mit einer Kalibriereinheit,
- Fig. 3: ein eine Anwendung der Heckenschere beschreibendes Flussdiagramm,
- Fig. 4: einen Kalibriermodus der Kalibriereinheit und
- Fig. 5: einen weiteren Kalibriermodus mit einem Zubehör der Heckenschere.

### Beschreibung des Ausführungsbeispiels

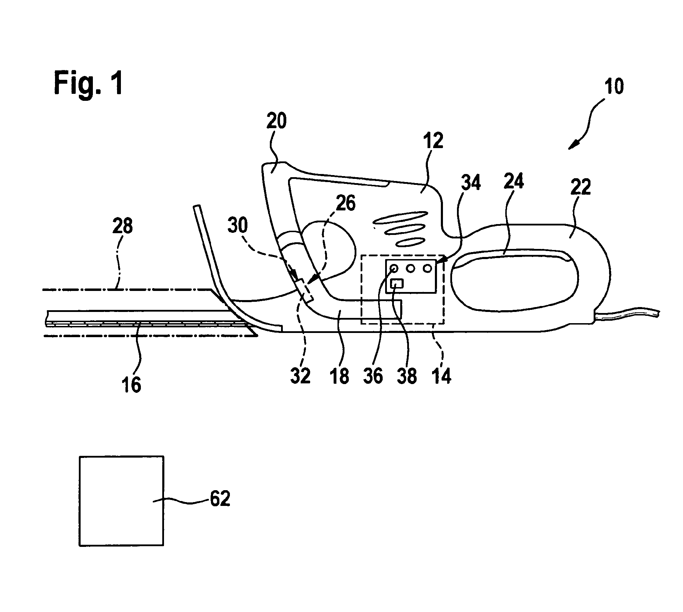

Figur 1 zeigt eine als Heckenschere ausgebildete Werkzeugmaschine 10 in einer Seitenansicht. Diese weist ein Gehäuse 12 auf, in welchem eine als Elektromotor ausgebildete Antriebseinheit 14 angeordnet ist. Die Antriebseinheit 14 ist zur Durchführung eines Werkzeugantriebs vorgesehen, bei welchem ein als Schere ausgebildetes Werkzeug 16 zu Bewegungen relativ zum Gehäuse 12 angetrieben wird. Die Werkzeugmaschine 10 weist ferner einen ersten, vorderen Handgriff 18 auf, in welchem ein erstes, von einem Bediener betätigbares Schaltmittel 20 versenkbar gelagert ist. Es ist außerdem ein zweiter, hinterer Handgriff 22 vorgesehen, in welchem ein zweites, von einem Bediener betätigbares Schaltmittel 24 versenkbar angeordnet ist. Die Schaltmittel 20, 24 sind zum Starten und Stoppen der Antriebseinheit 14 vorgesehen. Hierbei wird auf bekannte Weise ein Werkzeugantrieb durch die Antriebseinheit 14 ausschließlich mittels der simultanen Betätigung beider Schaltmittel 20, 24 ausgelöst.

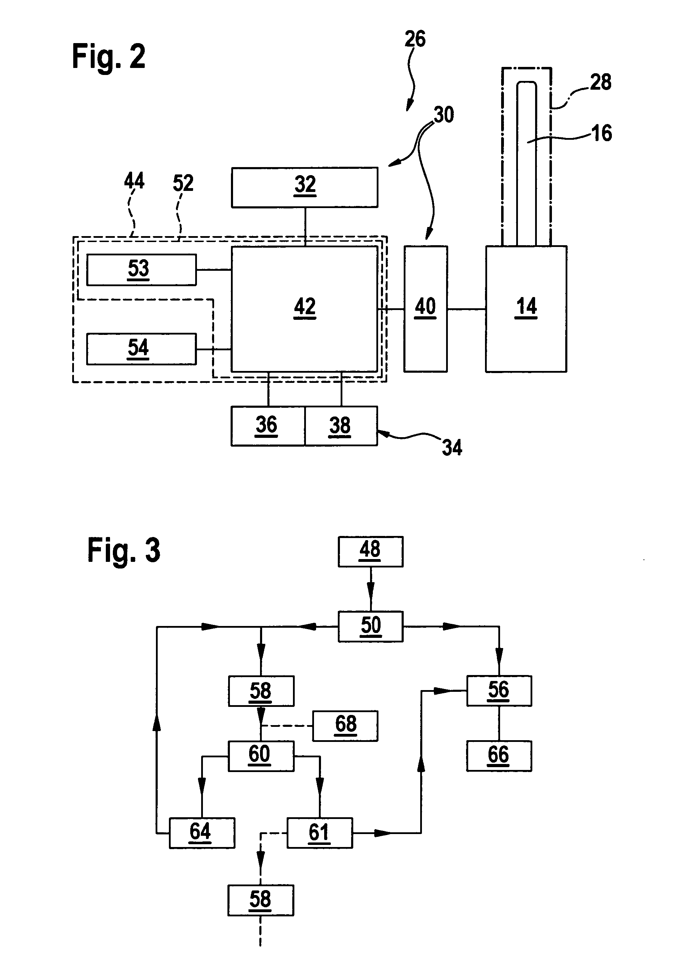

Die Werkzeugmaschine 10 ist ferner mit einer Werkzeugmaschinensicherheitsvorrichtung 26 versehen. Diese weist eine Sicherheitseinheit 30 auf, die dazu dient, einen Gefahrenbereich 28 in unmittelbarer Umgebung des Werkzeugs 16 zu überwachen. Hierzu weist die Sicherheitseinheit 30 eine Sensoreinheit 32 auf. Die Sicherheitseinheit 30 ist in Figur 2 näher dargestellt. Die Sensoreinheit 32 ist beispielhaft als kapazitiver Sensor ausgebildet. Weitere Ausführungen der Sensoreinheit 32, wie z.B. als induktiver Sensor, UWB-Sensor (Ultra wider band oder Ultrabreitband), Infrarotsensor, Videoüberwachung und/oder weitere, dem Fachmann als sinnvoll erscheinende Sensorausführungen sind denkbar. In einer weiteren Ausführung ist außerdem denkbar, dass die Sensoreinheit 32 zur Erfassung einer Kenngröße mittels eines gesendeten Erfassungssignals vorgesehen ist. Hierbei kann die Sensoreinheit 32 zwei Funktionsbauelemente aufweisen, insbesondere ein Sendemittel und ein Empfangsmittel, die z.B. jeweils in einem Handgriff 18, 22 angeordnet sind. Die Werkzeugmaschinensicherheitsvorrichtung 26 weist ferner eine Bedieneinheit 34 auf, deren Funktionsweise unten näher beschrieben wird. Diese weist eine optische Ausgabeeinheit 36 mit einem Satz von LED und eine Eingabeeinheit 38 mit einer Bedientaste auf.

Die Werkzeugmaschinensicherheitsvorrichtung 26 der Werkzeugmaschine 10 ist in einer schematischen Darstellung in Figur 2 näher dargestellt. In Figur 2 sind ferner die Antriebseinheit 14 und das Werkzeug 16 zu sehen. Wie oben beschrieben weist die Werkzeugmaschinensicherheitsvorrichtung 26 die Sicherheitseinheit 30 auf, welche die in Figur 1 dargestellte Sensoreinheit 32 umfasst. Die Sicherheitseinheit 30 weist ferner eine Aktorikeinheit 40 auf. Im betrachteten Beispiel dient die Aktorikeinheit 40 zum Ändern eines Werkzeugantriebsparameters eines durch die Antriebseinheit 14 durchgeführten Werkzeugantriebs in Abhängigkeit einer von der Sensoreinheit 32 erfassten Kenngröße. Hierzu steht die Aktorikeinheit 40 in Wirkverbindung mit der Antriebseinheit 14. Insbesondere dient die Aktorikeinheit 40 dazu einen Werkzeugbetrieb zu stoppen, wenn das Vorhandensein eines menschlichen Körperteils im Gefahrenbereich 28 erkannt wird.

Im betrachteten Ausführungsbeispiel ist die Werkzeugmaschine 10 als Handwerkzeugmaschine ausgeführt.

Die Werkzeugmaschinensicherheitsvorrichtung 26 weist außerdem eine Steuereinheit 42 auf, die mit der Sensoreinheit 32, der Aktorikeinheit 40 und der Bedieneinheit 34 in Wirkverbindung steht. Die Steuereinheit 42 weist ein nicht näher dargestelltes Auswertemittel auf, das zur Auswertung einer von der Sensoreinheit 32 erfassten Kenngröße vorgesehen ist, und dient insbesondere zur Steuerung der Aktorikeinheit 40 anhand eines Auswertevorgangs. Die Steuereinheit 42 kann einen Mikroprozessor oder einen Mikrokontroller aufweisen oder sie kann als Mikroprozessor oder Mikrokontroller ausgebildet sein.

Die Werkzeugmaschinensicherheitsvorrichtung 26 weist ferner eine Kalibriereinheit 44 auf, die zur Kalibrierung der Sicherheitseinheit 30 dient.

Bei einem Zusammenbau der Werkzeugmaschine 10 wird im Werk die Sicherheitseinheit 30 kalibriert. Dabei werden Schwellwerte von Kenngrößen, die von der Sensoreinheit 32 erfassbar sind, festgelegt. Wird bei einem Werkzeugantrieb und bei der Auswertung einer erfassten Kenngröße ein Schwellwert erreicht, so sendet die Steuereinheit 42 ein Steuersignal an die Aktorikeinheit 40, die Sicherheitsmaßnahmen vornimmt. Bei einer Anwendung der Werkzeugmaschine 10 kann eine Arbeitsumgebung von einer bei der Werkkalibrierung vorhandenen Umgebung abweichen. Hierdurch können aufgrund der geänderten Arbeitsumgebung Fehlauslösungen der Aktorikeinheit 40 einen Arbeitsvorgang mit der Werkzeugmaschine 10 beeinträchtigen. Die Kalibriereinheit 44 ist vorteilhaft dazu vorgesehen, Kalibrierungsdaten einer Werkkalibrierung oder einer vorherigen Anwendung der Werkzeugmaschine 10 mittels eines Bedienvorgangs eines Endbedieners zu ändern.

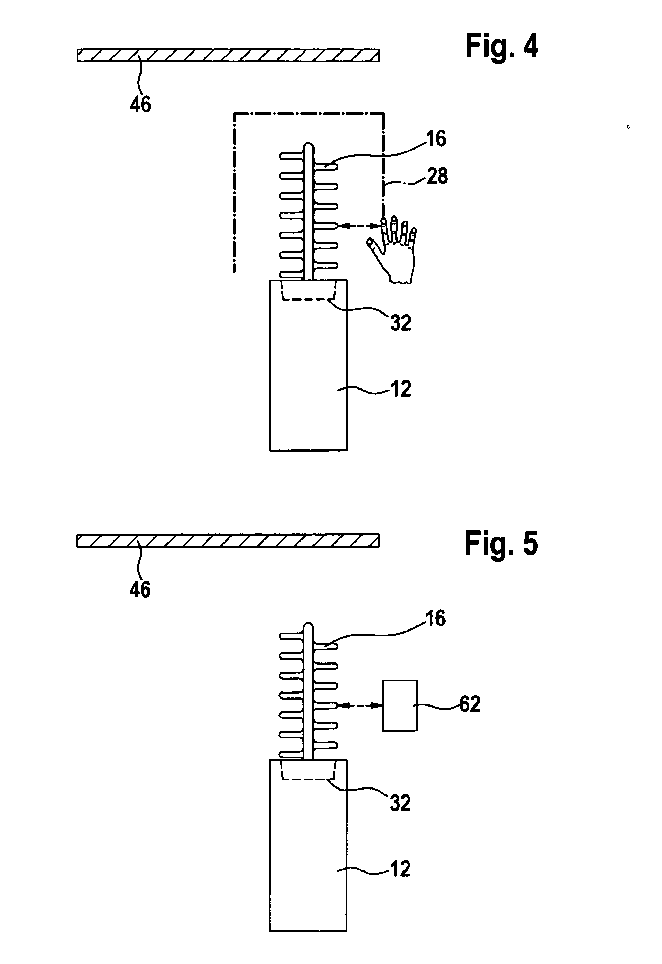

Eine Anwendung der Werkzeugmaschine 10 wird anhand eines Flussdiagramms in Figur 3 näher beschrieben. Die folgende Beschreibung bezieht sich außerdem auf die Figuren 2, 4 und 5. Figuren 4 und 5 zeigen die Werkzeugmaschine 10 in einer schematischen Ansicht. Diese wird in einer Arbeitsumgebung genutzt, in welcher sich ein Störobjekt 46 befindet.

Es wird angenommen, dass ein Bediener in einem Schritt 48 die Werkzeugmaschine 10 durch deren Anschließen an eine Netzstromversorgung in Betrieb nimmt. In einem nächsten Schritt 50 wird überprüft, ob vorhandene Kalibrierdaten für eine Bearbeitung mittels der Werkzeugmaschine 10 an die in Figur 4 gezeigte Arbeitsumgebung angepasst sind. Die Kalibriereinheit 44 weist hierzu, wie in Figur 2 zu sehen ist, eine Überprüfungseinheit 52 auf, die zum Überprüfen eines durch die Kalibrierdaten charakterisierten Kalibrierzustands der Sicherheitseinheit 30 vorgesehen ist. Im betrachteten Beispiel ist die Steuereinheit 42 als Bestandteil der Kalibriereinheit 44 und der Überprüfungseinheit 52 ausgebildet. In weiteren Ausführungsvarianten ist denkbar, dass die Kalibriereinheit 44 von der Steuereinheit 42 getrennt ausgebildet ist und z.B. einen von der Steuereinheit 42 unterschiedlichen Mikroprozessor aufweist. Die Überprüfungseinheit 52 weist eine Speichereinheit 53 auf, in welchem ein Programm zur Durchführung eines Überprüfungsmodus gespeichert ist. Bei der Überprüfung des Kalibrierzustands der Sicherheitseinheit 30 wird von der Überprüfungseinheit 52 ein Sensiervorgang der Sensoreinheit 32 ausgelöst, bei welchem zumindest eine Kenngröße erfasst wird. Diese Kenngröße oder eine mittels eines Auswertemittels der Steuereinheit 42 anhand der Kenngröße ausgewerteten Größe wird anschließend mit vorhandenen Kalibrierdaten verglichen, welche in einer in Figur 2 dargestellten Speichereinheit 54 der Kalibriereinheit 44 gespeichert sind. Diese Kalibrierdaten, wie z.B. Schwellwerte zur Auslösung der Aktorikeinheit 40, entsprechen einer Werkkalibrierung oder einer vor der Inbetriebnahme im Schritt 48, bei einem vorherigen Werkzeugmaschinenbetrieb durchgeführten Kalibrierung.

Der hier beschriebene Überprüfungsmodus der Überprüfungseinheit 52 ist ein automatischer Modus, welcher automatisch nach der Inbetriebnahme der Werkzeugmaschine 10 durch einen Endbediener stattfindet. In einer weiteren Ausführungsvariante ist denkbar, dass eine Überprüfung auf Wahl des Bedieners erfolgen kann. Im Vorfeld und während des Überprüfungsvorgangs verhindert die Aktorikeinheit 40 ein Starten eines Werkzeugantriebs mittels der Schaltmittel 20, 24. Wie dem Flussdiagramm zu entnehmen ist, setzt die Steuereinheit 42 zum Starten eines Werkzeugantriebs einen Überprüfungsvorgang voraus.

Im betrachteten Beispiel wird zur Überprüfung ein Sensiervorgang der Sensoreinheit 32 ausgelöst, die ebenfalls zur Überwachung des Gefahrenbereichs 28 während eines Werkzeugantriebs dient. In einer Ausführungsvariante ist denkbar, dass die Werkzeugmaschinensicherheitsvorrichtung 26 eine zur Sensoreinheit 32 zusätzliche Sensoreinrichtung aufweist, die bei einem Überprüfungsvorgang von der Überprüfungseinheit 52 aufgerufen wird. Die Sensoreinheit 32 und/oder eine zusätzliche Sensoreinrichtung können Kenngrößen erfassen, die von der Arbeitsumgebung abhängen, wie eine Temperaturkenngröße, eine Feuchtigkeitskenngröße, eine Impedanzkenngröße usw. Ist die Sensoreinheit 32 zur Erfassung mittels eines gesendeten Erfassungssignals vorgesehen, kann eine Korrelation zwischen dem Erfassungssignal in dessen empfangenen Form und dem Erfassungssignal in dessen gesendeten Form, wie z.B. durch eine Pegelauswertung des empfangenen Erfassungssignals, stattfinden.

Ist der vorhandene Kalibrierzustand von der Überprüfungseinheit 52 als für die aktuelle Arbeitsumgebung der Figur 4 geeignet angesehen, indem keine erhebliche Abweichung von unter der aktuellen Arbeitsumgebung erfassten Kenngrößen zu den gespeicherten Kalibrierungsdaten festgestellt wird, so wird von der Aktorikeinheit 40 in einem Schritt 56 die Antriebseinheit 14 zu einem Starten mittels der Schaltmittel 20, 24 freigegeben. Weicht die aktuelle Arbeitsumgebung von der Arbeitsumgebung ab, in welcher die vorherige Kalibrierung der Sicherheitseinheit 30 durchgeführt worden ist, so wird in einem Schritt 58 der Bediener informiert, dass ein Kalibriervorgang durchzuführen ist. Dies erfolgt mittels der Ausgabeeinheit 36 und der Steuereinheit 42. Hierbei wird die Ausgabeeinheit 36 abhängig von einem Kalibrierzustand von der Steuereinheit 42 zur Ausgabe einer Information gesteuert.

Ein erster Kalibriermodus ist in Figur 4 dargestellt. Hierbei platziert der Bediener eine Hand in der Umgebung des Werkzeugs 16, und zwar mit einem Hand-Werkzeug-Abstand seiner Wahl, und verbleibt in dieser Position während einer bestimmten Zeitspanne, während in einem Schritt 60 ein Sensiervorgang der Sensoreinheit 32 ausgelöst wird. Beim Sensiervorgang wird zumindest eine Kenngröße erfasst. Diese Kenngröße oder eine anhand dieser Kenngröße ermittelte Größe wird durch die Kalibriereinheit 44, und zwar insbesondere durch deren Steuereinheit 42, in die Speichereinheit 54 als Schwellwert zur Auslösung der Aktorikeinheit 40 gespeichert. Durch die Wahl des Hand-Werkzeug-Abstands wird die Dimension des Gefahrenbereichs 28 neu festgelegt. Es können ferner in die Speichereinheit 54 Kenngrößen gespeichert werden, die von Schwellwerten unterschiedlich sind und zur Charakterisierung der aktuellen Arbeitsumgebung und zu einer Überprüfung bei einer nächsten Inbetriebnahme der Werkzeugmaschine 10 dienen. Erfolgt der Kalibriervorgang, so wird der Bediener in einem Schritt 61 mittels der Ausgabeeinheit 36 informiert. Ist der Kalibriervorgang fehlgeschlagen, so wird der Bediener in einem Schritt 64 mittels der Ausgabeeinheit 36 aufgefordert, den Kalibriervorgang zu wiederholen.

Nach Erfolg des ersten Kalibriervorgangs können weitere Kalibriervorgänge durchgeführt werden. Dies ist in Figur 3 mittels einer vom Schritt 61 ausgehenden gestrichelten Linie dargestellt.

Ein weiterer Kalibriermodus der Kalibriereinheit 44 sieht vor, dass der Bediener eine Kalibrierung in einer typischen Arbeitsposition der Werkzeugmaschine 10 relativ zu einem zu bearbeitenden Objekt durchführt. Hierbei wird die Werkzeugmaschine 10 an das zu bearbeitende Objekt, wie z.B. eine zu schneidende Hecke, angebracht und sie wird vom Bediener in einer vorschriftgemäßen Halterungsposition gehalten. Es kann ferner ein weiterer Kalibriermodus vorgesehen sein, in welchem das Werkzeug 16 in die Nähe des Störobjekts 46 angebracht wird.

In einem weiteren Kalibriermodus wird der Bediener dazu aufgefordert, einen Kalibriervorgang mittels eines Referenzobjekts 62 durchzuführen. Das Referenzobjekt 62 ist ein Werkzeugmaschinenzubehör, welches mit der Werkzeugmaschine 10 mitgeliefert ist (siehe auch Figur 1). Zur Kalibrierung wird das Referenzobjekt 62 in der Nähe des Werkzeugs 16 angebracht. Es können verschiedene Referenzobjekte 62 vorgesehen sein, die jeweils aus einem unterschiedlichen Material hergestellt sind. Insbesondere kann ein Referenzobjekt 62 jeweils einem typischen Störobjekt zugeordnet sein.

Es können in weiteren Kalibriermodi der Werkzeugmaschine 10 weitere typische Gefahrsituationen fingiert werden. Insbesondere kann eine Kalibrierung der Sicherheitseinheit 30 durchgeführt werden, wenn ein elektrisches Kabel zur Versorgung der Werkzeugmaschine 10 in der Nähe des Werkzeugs 16 angebracht ist.

Nach einem Erfolgen der neuen Kalibrierung wird im Schritt 56 durch die Aktorikeinheit 40 die Antriebseinheit 14 zum Starten eines Werkzeugantriebs freigegeben. Dieser Werkzeugantrieb kann mittels der Betätigung der Schaltmittel 20, 24 in einem Schritt 66 ausgelöst werden.

Das Auslösen eines Sensiervorgangs der Sensoreinheit 32 im Schritt 60 kann automatisch erfolgen. Vorteilhafterweise befindet sich jedoch die Kalibriereinheit 44 nach Benachrichtigung des Bedieners im Schritt 58 in einem Wartemodus, wobei der Sensiervorgang mittels eines Betätigungsvorgangs des Bedieners auslösbar ist. Dies kann in einem Schritt 68 erfolgen, in welchem der Bediener die Eingabeeinheit 38 betätigt. Alternativ kann der Bediener den Sensiervorgang im Schritt 68 durch eine Betätigung eines des Schaltmittels 20, 24 auslösen.

Die verschiedenen Kalibriermodi sowie die mit einem Kalibriervorgang verbundenen Benachrichtigungen können durch eine Kodierung der Ausgabeeinheit 36, wie z.B. eine Farbenkodierung mittels farblicher LEDs, gekennzeichnet sein. In einer weiteren Ausführungsvariante ist denkbar, dass die Bedieneinheit 34 mit einer akustischen Ausgabeeinheit versehen ist, wobei die Kalibriermodi und Benachrichtigungen mittels einer Tonkodierung und/oder einer Sprachnachricht gekennzeichnet werden.

In einer weiteren Ausführungsvariante ist ferner denkbar, dass die Speichereinheit 54 im Zusammenwirken mit der Steuereinheit 42 zur Speicherung von Kalibrierungsdaten vorgesehen ist, die zumindest zwei unterschiedlichen Arbeitsumgebungen zugeordnet sind. Wird die Werkzeugmaschine 10 alternierend an zwei verschiedenen Einsatzorten eingesetzt, können nach Auswahl des Bedieners die an die jeweilige Arbeitsumgebung angepassten Kalibrierungsdaten herangezogen werden, ohne dass jeweils eine erneute Kalibrierung durchgeführt werden muss.

## Patentansprüche

1. Handwerkzeugmaschine mit einer Sicherheitseinheit (30) und einer Kalibriereinheit (44) zur Kalibrierung der Sicherheitseinheit (30), mit eine Überprüfungseinheit (52), die zum Überprüfen eines Kalibrierungszustands der Sicherheitseinheit (30) vorgesehen ist, sowie eine Bedieneinheit (34), die im Zusammenwirken mit der Kalibriereinheit (44) für einen Kalibriervorgang durch einen Endbediener vorgesehen ist, wobei die Sicherheitseinheit (30) eine Sensoreinheit (32) zum Erfassen einer Kenngröße bei einem Werkzeugantrieb aufweist **gekennzeichnet durch** die Überprüfungseinheit (52) dazu vorgesehen ist, in einem Überprüfungsmodus einen Sensiervorgang der Sensoreinheit (32) vor einem Werkzeugantrleb auszulösen, wobei eine Steuereinheit (42) zur Steuerung eines Werkzeugantriebs vorgesehen ist, welche in zumindest einem Betriebsmodus zum Starten des Werkzeugantriebs eine Überprüfung des Kalibrierzustands voraussetzt.

2. Werkzeugmaschine nach Anspruch 1, **dadurch gekennzeichnet, dass** die Überprüfungseinheit (52) zumindest einen automatischen Überprüfungsmodus aufweist.

3. Werkzeugmaschine nach einem der vorhergehenden Ansprüche, **gekennzeichnet durch** eine Speichereinheit (54) und eine Steuereinheit (42), die im Zusammenwirken mit der Speichereinheit (54) zum Speichern von Kalibrierungsdaten vorgesehen ist

4. Werkzeugmaschine nach einem der vorhergehenden Ansprüche, **gekennzeichnet durch** eine Ausgabeeinheit (36) und eine Steuereinheit (42), die im Zusammenwirken mit der Ausgabeeinheit (36) zur Ausgabe einer information in Abhängigkeit eines Kalibrierzustands der Sicherheitseinheit (30) vorgesehen ist.

5. Verfahren mit einer Handwerkzeugmaschine (10), die eine Sicherheitseinheit (30) aufweist, **dadurch gekennzeichnet, dass** eine Überprüfung eines Kalibrierzustands der Slcherheitseinheit (30) nach einer Inbetriebnahme der Werkzeugmaschine (10) durch einen Endbediener stattfindet, bei der eine Überprüfungseinheit (52), welche eine Speichereinheit (53) aufweist, in welchem ein Programm zur Durchführung eines Überprüfungsmodus gespeichert ist, bei der Überprüfung des Kalibrierzustands der Sicherheitseinheit (30) ein Sensiervorgang der Sensoreinheit 32 ausgelöst, bei welchem zumindest eine Kenngröße erfasst wird und diese Kenngröße oder eine mittels eines Auswertemittels der Steuereinheit (42) anhand der Kenngröße ausgewerteten Größe anschließend mit vorhandenen Kalibrierdaten, welche in einer Speichereinheit (54) der Kalibriereinheit (44) gespeichert sind, verglichen wird.

6. Verfahren nach Anspruch 5, **dadurch gekennzeichnet, dass** eine Kalibrierung der Sicherheitseinheit (30) mittels eines Referenzobjekts (62) durchgeführt wird, das als Werkzeugmaschinenzubehör ausgebildet ist.

7. System mit einer Werkzeugmaschine nach einem der Ansprüche 1 bis 4 und einem als Werkzeugmaschinenzubehör ausgebildeten Referenzobjekt (62) für einen Kalibriervorgang zur Durchführung des Verfahrens nach Anspruch 5.

## Claims

1. Handheld machine tool having a safety unit (30) and a calibration unit (44) for calibrating the safety unit (30), having a checking unit (52) which is provided to check a calibration state of the safety unit (30), and having an operator control unit (34) which, in interaction with the calibration unit (44), is provided for a calibration process by an end operator, with the safety unit (30) having a sensor unit (32) for detecting a characteristic variable in the event of a tool being driven, **characterized by** the checking unit (52) being provided to initiate a sensing process of the sensor unit (32) in a checking mode before a tool is driven, with a control unit (42) being provided to control driving of a tool, said control unit requiring the calibration state to be checked in at least one operating mode for starting driving of the tool.

2. Machine tool according to Claim 1, **characterized in that** the checking unit (52) has at least one automatic checking mode.

3. Machine tool according to either of the preceding claims, **characterized by** a memory unit (54) and a control unit (42) which, in interaction with the memory unit (54), is provided to store calibration data.

4. Machine tool according to one of the preceding claims, **characterized by** an output unit (36) and a control unit (42) which, in interaction with the output unit (36), is provided to output information as a function of a calibration state of the safety unit (30).

5. Method having a handheld machine tool (10) which has a safety unit (30), **characterized in that** a calibration state of the safety unit (30) is checked after the machine tool (10) is started by an end operator, during which checking operation a checking unit (52), which has a memory unit (53) in which a program for carrying out a checking mode is stored, initiates a sensing process of the sensor unit (32) when the calibration state of the safety unit (30) is checked, at least one characteristic variable being detected during said sensing process and this characteristic variable or a variable which is evaluated by means of an evaluation means of the control unit (42) on the basis of the characteristic variable then being compared with existing calibration data which is stored in a memory unit (54) of the calibration unit (44).

6. Method according to Claim 5, **characterized in that** the safety unit (30) is calibrated by means of a reference object (62) which is in the form of a machine tool accessory.

7. System having a machine tool according to one of Claims 1 to 4 and having a reference object (62), which is in the form of a machine tool accessory, for a calibration process for carrying out the method according to Claim 5.

## Revendications

1. Outil motorisé manuel présentant
une unité de sécurité (30) et une unité d'étalonnage (44) qui étalonne l'unité de sécurité (30), contenant
une unité de vérification (52) qui est prévue pour vérifier l'état d'étalonnage de l'unité de sécurité (30) et
une unité de commande (34) qui est prévue pour coopérer avec l'unité d'étalonnage (44) pour permettre à un utilisateur final d'effectuer l'étalonnage,
l'unité de sécurité (30) présentant une unité de détection (32) qui détecte une grandeur caractéristique de l'entraînement de l'outil,
**caractérisé en ce que**
l'unité de vérification (52) est prévue pour déclencher, en mode de vérification, une opération de détection de l'unité de détection (32) avant un entraînement de l'outil et
**en ce que** l'outil présente une unité de commande (42) qui commande l'entraînement de l'outil et qui impose une vérification de l'état de l'étalonnage dans au moins un mode de fonctionnement destiné à démarrer l'entraînement de l'outil.

2. Outil motorisé selon la revendication 1, **caractérisé en ce que** l'unité de vérification (52) présente au moins un mode de vérification automatique.

3. Outil motorisé selon l'une des revendications précédentes, **caractérisé par** une unité de mémoire (54) et une unité de commande (42) prévue pour coopérer avec l'unité de mémoire (54) pour conserver des données d'étalonnage.

4. Outil motorisé selon l'une des revendications précédentes, **caractérisé par** une unité de sortie (36) et une unité de commande (42) prévue pour coopérer avec l'unité de sortie (36) pour délivrer une information qui dépend de l'état d'étalonnage de l'unité de sécurité (30).

5. Procédé utilisant un outil manuel motorisé (10) qui présente une unité de sécurité (30),
le procédé étant **caractérisé en ce**
**qu'**une vérification de l'état d'étalonnage de l'unité de sécurité (30) est effectuée par l'utilisateur final après une mise en service de l'outil motorisé (10),
en ce qu'une unité de vérification (52) qui présente une unité de mémoire (53), dans laquelle un programme d'exécution d'un mode de vérification est conservé en mémoire, déclenche une opération de détection par l'unité de détection (32) lors d'une vérification de l'état d'étalonnage de l'unité de sécurité (30),
en ce qu'au moins une grandeur caractéristique est saisie lors de cette opération de détection et
en ce que cette grandeur caractéristique ou une grandeur évaluée sur la base de cette grandeur caractéristique au moyen d'un moyen d'évaluation de l'unité de commande (42) est ensuite comparée à des données existantes d'étalonnage conservées dans une unité de mémoire (54) de l'unité d'étalonnage (44).

6. Procédé selon la revendication 5, **caractérisé en ce qu'**un étalonnage de l'unité de sécurité (30) est exécuté au moyen d'un objet de référence (62) configuré comme accessoire de l'outil motorisé.

7. Système présentant un outil motorisé selon l'une des revendications 1 à 4 et un objet de référence (62) configuré comme accessoire de l'outil motorisé, utilisé pour une opération d'étalonnage en vue d'exécuter le procédé selon la revendication 5.
